# EUROPEAN PATENT SPECIFICATION

(11) **EP 0 768 286 B1**
(45) Date of publication and mention of the grant of the patent: **06.09.2000**
(21) Application number: 95120596.2
(22) Date of filing: 27.12.1995
(51) Int. Cl.: C05F 17/02

(54) **Horizontal paddle type fermentation system and method of operating the same**
Horizontalschaufelrad enthaltende Fermentationsanlage und Verfahren zum Betrieb derselben
Système pour fermentation du type contenant d'une roue à aubes et procédé permettant son fonctionnement

(30) Priority: 11.10.1995 JP 28934495
(43) Date of publication of application: 16.04.1997
(73) Proprietor: EBARA CORPORATION, Ohta-ku, Tokyo (JP)
(72) Inventor: Nomoto, Masao, Yokohama-shi, Kanagawa-ken (JP)
(74) Representative: Geyer, Ulrich F., Dr. Dipl.-Phys.

(56) References cited:
- EP-A- 0 021 064
- EP-A- 0 569 919
- DE-C- 4 407 894
- NL-A- 9 300 114
- DATABASE WPI Section Ch, Week 9626 Derwent Publications Ltd., London, GB; Class D16, AN 96-255036 XP002021605 & JP-A-08 104 587 (EBARA CORP) , 23 April 1996

## Description

### BACKGROUND OF THE INVENTION:

The present invention relates to a horizontal paddle type fermentation system and, more particularly, to a horizontal paddle type fermentation system which efficiently mixes, breaks up and transfers organic substances such as crushed refuse, sludge, dung, etc., and which, while doing so, causes such organic substances to ferment by the action of microorganisms, thereby composting the organic substances. The present invention also relates to a method of operating the horizontal paddle type fermentation system.

### (Prior Art)

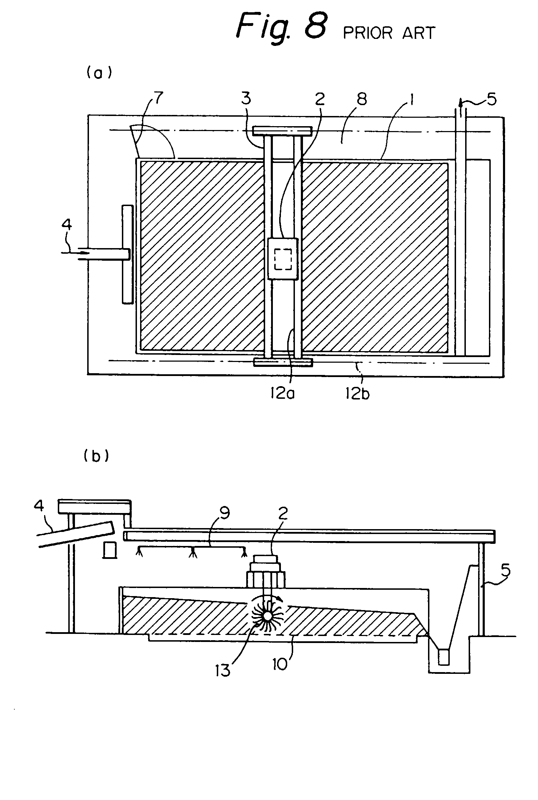

Figs. 8(a) and 8(b) show a conventional horizontal paddle type fermentation system. Crushed refuse or the like as a raw material is introduced into a fermenter 1, which is the hatched part in the figure, from an inlet 4. A stirrer 2 with a rotary paddle wheel 13 is caused to repeat longitudinal travel motion and lateral traverse motion in the fermenter 1 by the action of a travel gear 3, thereby turning the raw material, that is, stirring and moving it. During the longitudinal travel motion, the travel gear 3 travels on rails 12b. The travel gear 3, which is equipped with rails 12a and the stirrer 2, moves on the rails 12b. During the lateral movement in the fermenter 1, the stirrer 2 moves on the rails 12a provided on the travel gear 3. During the lateral movement of the stirrer 2, the paddle wheel 13, which is provided on the stirrer 2, rotates in the direction of the arrow shown in Fig. 8(b).

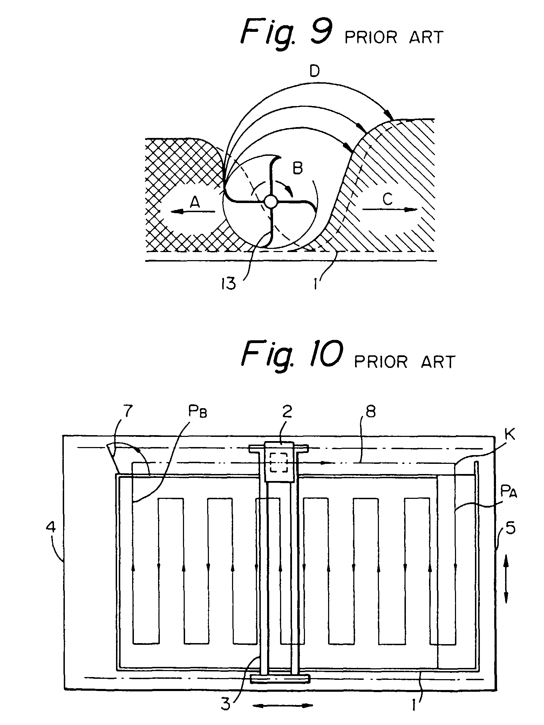

Fig. 9 shows the way in which the raw material is turned, i.e. stirred and moved, by the rotation of the paddle wheel 13. In the figure, reference symbol A denotes the direction of progress of the paddle wheel 13, B the direction of rotation of the paddle wheel 13, C the direction of movement of the raw material, and D the scattering loci of the raw material. That is, as the paddle wheel 13, which has blades with hooked tips, rotates forward, the raw material lying in the progress direction of the paddle wheel 13 scatters in the direction opposite to the paddle wheel progress direction, drawing the loci D. Accordingly, if the travel gear 3 stops the longitudinal travel motion in the state shown in Fig. 8(a), and the stirrer 2 alone traverses from end to end on the rails 12a while rotating the paddle wheel 13, the raw material lying on the left side of the bridge portion of the travel gear 3 moves to the right side thereof. Then, the travel gear 3 travels slightly leftward on the rails 12b and stops, and the stirrer 2 is caused to traverse on the rails 12a. Thus, the raw material lying on the left side of the bridge portion of the travel gear 3 is scattered beyond the travel gear 3, thereby being moved to the right side of the bridge portion of the travel gear 3. By repeating the travel and traverse motions of the travel gear 3 and the stirrer 2, the raw material introduced into the fermenter 1 through the inlet 4 is successively moved rightward as viewed in the drawing, and taken out of the fermenter 1 through an outlet 5. Meanwhile, the raw material is gradually composted by fermentation.

By the action of turning the raw material performed by the paddle wheel 13 as described above, the raw material is favorably ventilated, and uniform ventilation is effected in the entire fermenter 1. Thus, the raw material is composted by aerobic fermentation under the effect of microorganisms. So-called "turning" means that the raw material is satisfactorily mixed by the rotation of the paddle wheel 13, and that the introduced raw material is successively transferred from the inlet side to the outlet side by the scattering action of the paddle wheel 13. The turning is a requisite for a fermenter which composts organic matter by fermentation.

As has been described above, the stirrer 2 in the prior art is designed to transfer the raw material from the left side of the stirrer 2, as viewed in the drawing, to the right side by the scattering action of the paddle wheel 13. Therefore, the travel gear 3 usually starts from the right end (outlet side) of the fermenter 1 and successively moves toward the left end (inlet side). When the travel gear 3 reaches the left top end (end point) of the fermenter 1, as viewed in Fig. 8(a), upon completion of turning of the all raw material in the fermenter 1, a return door 7 opens, and the stirrer 2 returns to the travel start point at the right end of the fermenter 1 through a passage 8. Then, the stirrer 2 restarts the turning operation throughout the fermenter 1.

The locus K of movement of the stirrer 2 in the conventional system will be explained below with reference to Fig. 10. First, the stirrer 2 enters an outlet part PA of the fermenter 1 through the passage 8. At the outlet part PA, the paddle wheel 13 of the stirrer 2 is started to rotate. Then, a zigzag operation of the stirrer 2, in which traversing and traveling of the stirrer 2 are repeated, is carried out in the fermenter 1 from the outlet (5) side toward the raw material inlet (4) side. By carrying out the zigzag operation, all the raw material in the fermenter 1 is turned. That is, transfer and stirring of the raw material are attained simultaneously.

The zigzag operation is completed as the stirrer 2 reaches the passage end PB (end point) at the inlet (4) side of the fermenter 1. Thereafter, the lateral movement of the stirrer 2 and the rotation of the paddle wheel 13 are stopped in front of the return door 7, which is installed between the fermenter 1 and the passage 8 and normally closed to prevent the raw material from overflowing into the passage 8.

Thereafter, the return door 7 is opened to allow the stirrer 2 to come out of the fermenter 1. Subsequently, the stirrer 2 laterally moves from the fermenter 1 to the passage 8. After the stirrer 2 has completely entered the passage 8, it is moved through the passage 8 from the inlet side toward the outlet side by the travel gear 3 and stopped at the start point (PA). Meanwhile, the return door 7 is closed. In Fig. 10, reference symbol K denotes the locus of movement of the stirrer 2.

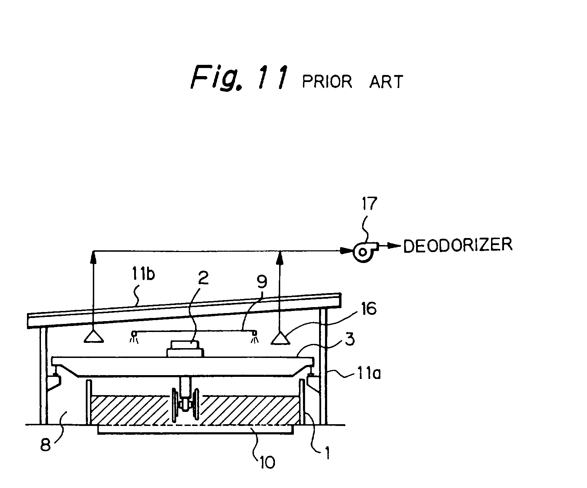

Fig. 11 is a sectional side view of the above-described conventional fermentation system, including the building thereof.

Thus, the conventional horizontal paddle type fermentation system needs the passage 8 for the stirrer 2 to move from the inlet (4) side to the outlet (5) side of the fermenter 1 via the return door 7, and the return door 7 for the stirrer 2 to come out of the fermenter 1 to the passage 8. In addition, it is necessary to provide buildings lla and llb for covering the fermenter 1 and the passage 8. Since the return door 7 and the passage 8 are required, the size of the whole building (11a and 11b) for accommodating the fermenter 1 is unfavorably large; this restricts the reduction of the construction cost. Further, the presence of the return door 7 causes the stirrer 2 to be accompanied by raw material when it comes out of the fermenter 1 to the passage 8. It is therefore necessary to clean the return door area as a maintenance operation.

Further, the conventional fermentation system requires a humidifier 9 for promoting fermentation of organic matter, and suction hoods 16, a deodorizing fan 17, a deodorizer, etc. for removing the odor produced during fermentation. These devices inevitably become large in size because the internal volume of the building is large.

The EP 0 021 064 A1 discloses a method and an apparatus for composting a relatively large quantity of organic materials with a relatively small agitator adapted to travel in zig-zag path in a generally rectangular heaping zone where the organic materials are piled in a layer.

The EP 0 569 919 A1 discloses a converting machine running forwards/backwards automatically in open or closed compost containers for the mechanical and/or chemical treatment of quantities of material being stored in a compost container having at least one rotating element and having a set which comprises at least two types of converting tools from the group of loosening tools, comminution tools and receiving and transport tools, wherein these conversion tools can be connected detachably for selective exchange for others to the rotating element of which there is at least one.

The present invention provides a horizontal paddle type fermentation system as set forth in claim 1. Preferred embodiments are disclosed in the dependent claims.

### SUMMARY OF THE INVENTION:

### (Problems to be Solved by the Invention)

In view of the above-described problems of the prior art, an object of the present invention is to provide a compact horizontal paddle type fermentation system which is easy to maintain and small in size, and also a method of operating the horizontal paddle type fermentation system.

### (Means for Solving the Problems)

The present invention provides a horizontal paddle type fermentation system having a fermenter for composting a raw material stored therein by fermentation, a stirrer with a paddle wheel which stirs and moves the raw material in one direction, thereby turning the raw material, and a travel gear for freely moving the stirrer in the fermenter. The fermentation system further has rails for moving the travel gear between a raw material inlet and an outlet, and side walls for covering the fermenter. The rails and the side walls are supported by side walls of the fermenter. The paddle wheel has blade tips which are capable of turning the raw material in opposite directions in response to forward and backward rotation of the paddle wheel.

In addition, the present invention is characterized in that the side walls that cover the fermenter and the side walls of the fermenter are integrated with each other, and that support blocks for the rails that support the travel gear are secured to the inner wall surfaces of the integrated side walls.

In addition, the present invention is characterized in that the stirrer is moved to travel through the fermenter from the outlet side toward the inlet side with the paddle wheel rotating forward, thereby stirring and transferring all the raw material in the fermenter in the direction of the outlet, and thereafter, in order to return the stirrer to an operation start point, it is moved to travel through the fermenter from the inlet side toward the outlet side with the paddle wheel rotating backward, thereby turning a part of the raw material in the fermenter in the direction of the inlet.

In addition, the present invention provides a method of operating the horizontal paddle type fermentation system, which is characterized in that a return start point for returning the stirrer to the operation start point in the fermenter is changed for each run, thereby preventing the turning of the raw material in the direction of the inlet from being localized on one region.

The operating method is further characterized in that a distance through which the stirrer is traversed during the return operation is set in the range of from zero to a distance corresponding to the width of the paddle wheel, thereby defining a range of turning the raw material in the direction of the inlet.

### BRIEF DESCRIPTION OF THE DRAWINGS

Fig. 1 is a plan view of one embodiment of the horizontal paddle type fermentation system according to the present invention.

Fig. 2 is a sectional side view of the fermentation system shown in Fig. 1.

Fig. 3 is a sectional side view of another embodiment of the horizontal paddle type fermentation system according to the present invention.

Figs. 4(a) to 4(c) are views showing the structure of a paddle wheel in one embodiment of the present invention, in which: Fig. 4(a) shows the whole paddle wheel; Fig. 4(b) shows the tip portion of a blade of the paddle wheel; and Fig. 4(c) is a side view of the blade tip.

Fig. 5(a) illustrates an operation of the paddle wheel, shown in Fig. 4(a), when rotating forward.

Fig. 5(b) illustrates an operation of the paddle wheel, shown in Fig. 4(a), when rotating backward.

Fig. 6 illustrates a method of operating the horizontal paddle type fermentation system according to the present invention.

Fig. 7 illustrates another method of operating the horizontal paddle type fermentation system according to the present invention.

Figs. 8(a) and 8(b) are plan and front views, respectively, showing a conventional horizontal paddle type fermentation system.

Fig. 9 illustrates the way in which a raw material is turned by the rotation of a paddle wheel.

Fig. 10 illustrates a method of operating the conventional fermentation system shown in Figs. 8(a) and 8(b).

Fig. 11 is a sectional side view of the conventional fermentation system shown in Figs. 8(a) and 8(b).

### DETAILED DESCRIPTION OF THE PREFERRED EMBODIMENTS:

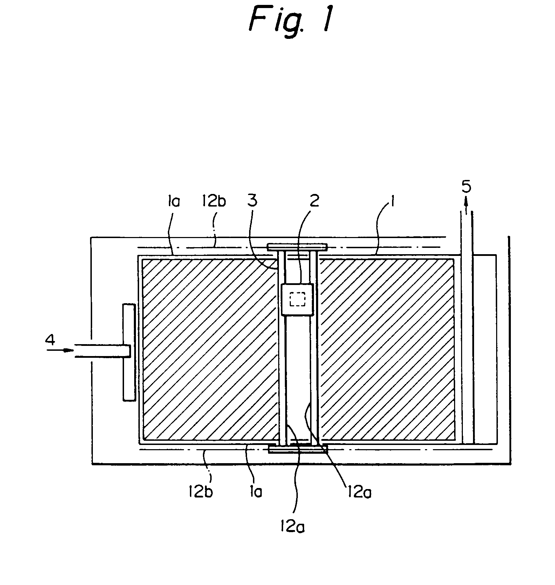

One embodiment of the present invention will be described below with reference to Figs. 1 to 7.

Fig. 1 is a plan view of one embodiment of the horizontal paddle type fermentation system according to the present invention. In a fermenter 1, a raw material such as crushed refuse, sludge, dung, etc. is stored and gradually composted by aerobic fermentation under the effect of microorganisms. The raw material is introduced into the fermenter 1 from an inlet 4. In the fermenter 1, the raw material is stirred and, at the same time, gradually transferred from the inlet (4) side toward an outlet 5 as well as stirred by a stirrer 2 with a paddle wheel. The turning operation allows air to enter the gaps between pieces of the broken raw material, thus enabling fermentation to progress. The stirrer 2 performs a zigzag operation in which it repeats a zigzag traverse and travel motion in the fermenter 1, thereby uniformly stirring and transferring all the raw material stored in the fermenter 1 in the same way as in the prior art.

In this embodiment, a travel gear 3 which enables the stirrer 2 to move zigzag is supported by rails 12b, and the rails 12b are respectively supported by longitudinally-extending side walls 1a of the fermenter 1 so as to lie in the neighborhood of the side walls 1a. The travel gear 3 bridges the rails 12b on both sides of the fermenter 1, and travels from the outlet (5) side toward the inlet (4) side, thereby turning and transferring the raw material from the inlet (4) side toward the outlet (5) side. Thus, since the rails 12b of the travel gear 3 are supported by the side walls 1a on both sides of the fermenter 1, it is possible to save the space for the passage 8 conventionally used for the stirrer 2 to return to the outlet (5) side from the inlet (4) side.

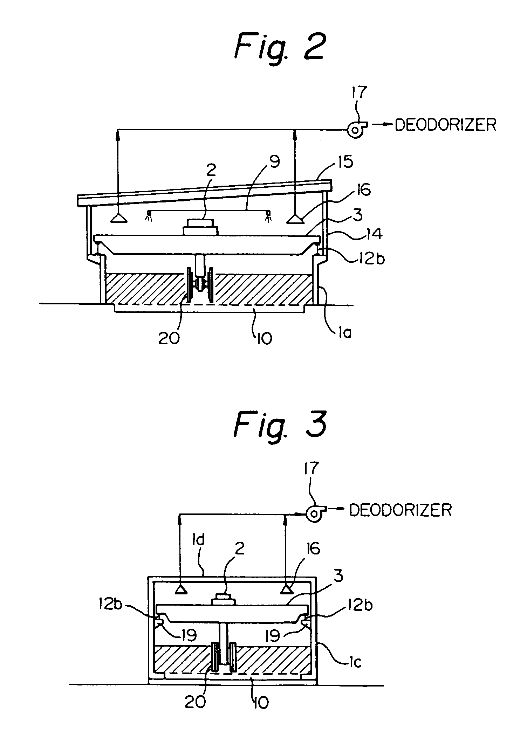

Fig. 2 is a sectional side view of the horizontal paddle type fermentation system shown in Fig. 1. As will be clear from the figure, the rails 12b of the travel gear 3, which is equipped with the stirrer 2, are supported by the side walls 1a of the fermenter 1. Side walls 14 of a building that covers the fermenter 1 are also supported by the side walls 1a of the fermenter 1. A ceiling 15 that covers the fermenter 1 is secured to the upper ends of the side walls 14 of the building covering the fermenter 1. Accordingly, the building can be made compact in size, and the building production cost can be reduced.

The fermentation system in this embodiment is also provided with a humidifier 9 for promoting fermentation. However, since the space in the building is narrower than in the prior art by at least an amount corresponding to the space for the passage 8, a smaller-sized humidifier can satisfactorily function as the humidifier 9. Further, in this embodiment also, the fermentation system is provided with suction hoods 16 and a deodorizing fan 17, together with a deodorizer for preventing secondary environmental pollution which would otherwise be caused by the odor produced in the process of composting. However, since the internal space of the building has become smaller, the capacities of both the deodorizing fan 17 and the deodorizer can be correspondingly reduced.

Fig. 3 is a sectional side view of another embodiment of the horizontal paddle type fermentation system according to the present invention. This embodiment is intended for a small-sized fermenter in comparison to the fermenter 1 in the embodiment shown in Fig. 2. In this embodiment, the side walls of the fermenter and the side walls covering the fermenter are integrally formed from side wall members 1c. Therefore, the fermentation system does not particularly need side walls for the building. Similarly, a ceiling panel 1d of the fermenter, which corresponds to the ceiling of the building that covers the fermenter, is integrated with the side wall members 1c. That is, the fermenter container can be used also as a fermenter building by forming the walls and ceiling of the fermenter from steel plate.

In this embodiment, the rails 12b for supporting the travel gear 3 are supported by respective support blocks 19 which are secured to the inner walls of the fermenter. Accordingly, the fermenter container in this embodiment can be produced as an integral structure in a factory and installed as it is at a desired site. It should be noted that in this embodiment also, the fermentation system is provided with suction hoods 16 and a deodorizing fan 17, and that since the space to be evacuated becomes narrow, the capacities of these devices can be reduced to a considerable extent; this is favorable from the energy-saving point of view.

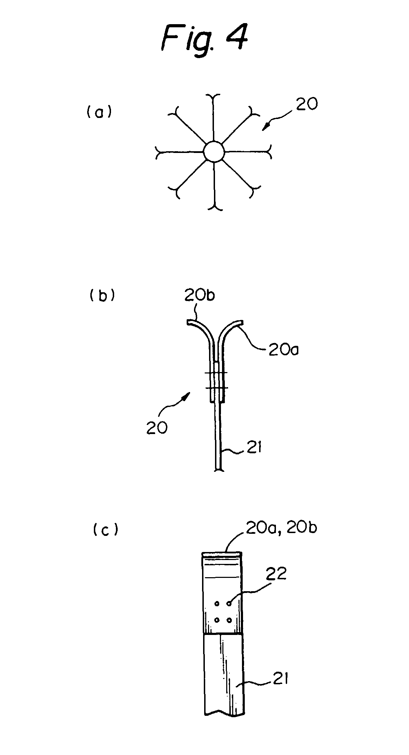

Fig. 4(a) shows the structure of a paddle wheel 20 provided on the above-described stirrer. Each blade of the paddle wheel 20 in this embodiment has two hooked tips 20a and 20b which are curved away from each other so that the paddle wheel 20 can turn the raw material regardless of whether the paddle wheel 20 rotates forward or backward, that is, the paddle wheel 20 can stir and transfer the raw material in either of the opposite directions. Fig. 4(b) is an enlarged view of the blade tip portion, and Fig. 4(c) is a side view of the blade tip portion. That is, a paddle blade tip 20a for forward rotation and a paddle blade tip 20b for backward rotation are secured to the distal end of a rim 21 by nuts and bolts 22.

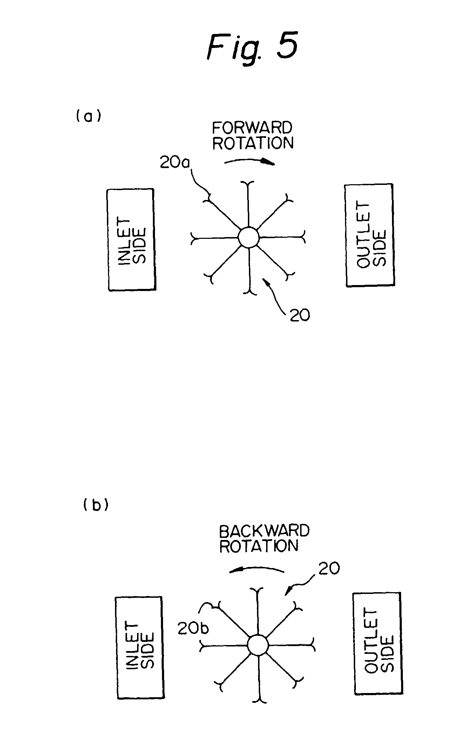

Figs. 5(a) and 5(b) show the operation of the paddle wheel 20 having the blade tips 20a and 20b, which are curved in the opposite directions. As shown in Fig. 5(a), when the paddle wheel 20 rotates forward, the blade tips 20a turn the raw material, i.e. stir and transfer it toward the outlet side from the inlet side. When the paddle wheel 20 rotates backward, as shown in Fig. 5(b), the blade tips 20b scatter the raw material toward the inlet side, thus transferring the raw material from the outlet side to the inlet side.

The go path of the stirrer, that is, the locus of movement of the stirrer during an operation in which it progresses zigzag from the outlet side to the inlet side, repeating traveling and traversing while turning the raw material, is the same as that shown in Fig. 10, which has already been described in regard to the prior art. However, unlike the prior art, this embodiment has no return passage for the stirrer. Therefore, the stirrer returns to the start point on the outlet side through the fermenter with the paddle wheel rotating backward.

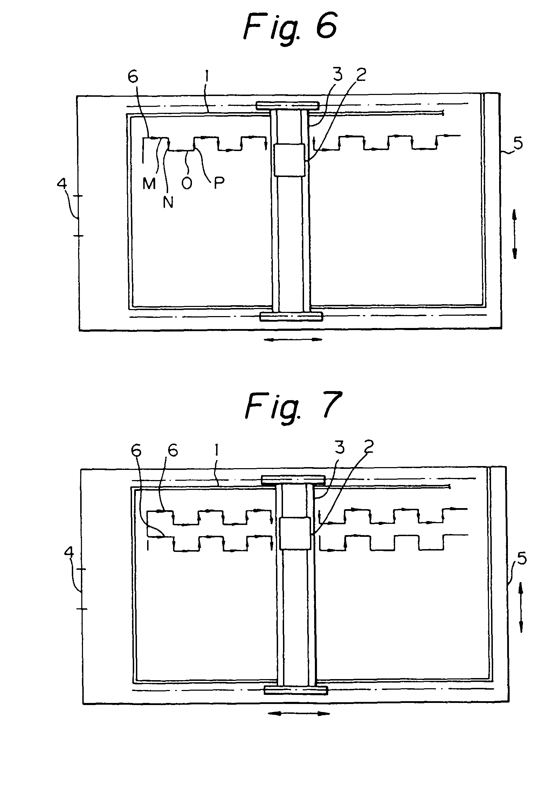

The stirrer moving method will be explained below more specifically with reference to Fig. 6:
① The rotational direction of the paddle wheel of the stirrer for the go path, which is forward, is reversed. That is, the paddle wheel is rotated backward.
② At the inlet part, the stirrer is moved to travel slightly toward the outlet side (M section).
③ After the traveling, the stirrer traverses slightly (N section)
④ After the traversing, the stirrer is moved to travel toward the outlet side again (O section).
⑤ The stirrer traverses in the opposite direction to that in ③ (P section).
⑥ The zigzag operation from ② to ⑤ is repeated until the stirrer reaches the outlet (5) side.

This method enables the stirrer to be moved through the fermenter 1 from the inlet part to the outlet part without a return door and a passage.

An experimental result revealed that, when the stirrer was moved through the fermenter by traveling only, with the traverse motion in ③ and ⑤ omitted, the power for the stirrer during traveling became large, and power fluctuation was recognized.

However, when the layer thickness of the raw material in the fermenter is thin, or when the properties of the raw material are favorable (i.e. the apparent specific gravity is low, and adhesion is weak), it is possible to operate the stirrer without the need of incorporating a traversing pattern.

Further, when the stirrer returns to the outlet side from the inlet side through the fermenter, if the stirrer always takes the same route, no raw material can be introduced into a portion of the inlet part at the return route of the stirrer. In such a case, the residence time (days) of the raw material in that portion becomes excessively long, resulting in a difference in product quality between the above-described portion and another portion in the inlet part of the fermenter. For this reason, it is necessary to properly change the return start point of the stirrer in the fermenter, for example, to shift it successively, as shown in Fig. 7, so that uniform compost can be produced in the whole fermenter.

The change of the return start point can be readily realized, for example, by a method in which the travel position of the stirrer 2 is changed by using a limit switch which is provided on the travel gear 3 of the fermenter 1, or a method in which the traversing time of the stirrer 2 is changed for each run at the inlet part. It should be noted that it is preferable from the viewpoint of preventing undesired residence of the raw material to set the distance through which the stirrer is traversed during the return operation in the range of from zero to a distance corresponding to the width of the paddle wheel, thereby defining a range of turning the raw material in the direction of the inlet.

The horizontal paddle type fermentation system used in this embodiment had a stirrer (paddle width: 1.1 m) with a paddle diameter of 1.6 m and a fermenter with a width of 9 m and a length of 20 m. With this fermentation system, an experiment was carried out using crushed refuse under the condition that the layer thickness of the raw material when introduced was 1.6 m. As a result, when the stirrer was run from the inlet part to the outlet part with the traversing distance set at 1.1 m, it was possible to perform a smooth operation without overload of an electric motor for driving the stirrer.

When a similar operation was performed with the traversing distance changed to 0.5 m, the current value of the stirrer rose occasionally, but no overload occurred.

In addition, the stirrer was run by traveling only, with the traversing distance set at 0 m. In that case, piles of raw material frequently crumbled at the sides of the stirrer, causing overload, thus making it impossible to continue the operation.

On the basis of the above experimental results, the raw material piling condition was changed so that the layer thickness of the raw material when introduced was 1.0 m, and the stirrer was run with the traversing distance set at 0 m. In that case, no overload occurred, although the current value slightly fluctuated.

These results have revealed that the stirrer can be effectively returned through the fermenter by setting the traversing distance in the range of from 0 m to a distance approximately equal to the paddle width. However, it is desirable to set the traversing distance at a value approximately equal to the paddle width in order to ensure the desired throughput capacity one hundred percent.

The present invention makes it possible to eliminate a return door and a passage which have heretofore been essential for the conventional fermentation systems. Consequently, the width of the fermenter building can be reduced to a value equal to the span of the travel gear, and thus the construction cost can be reduced. Further, since no return door is needed, it becomes unnecessary to carry out inspection and cleaning which have heretofore been necessary to conduct at the return door area, and thus labor for maintenance can be saved to a considerable extent. Furthermore, since the side walls and the ceiling, which cover the fermenter, can be made small and compact in size, the internal volume of the building reduces, thus making it possible to reduce the capacities of the deodorizing fan and other devices and save energy.

## Claims

1. A horizontal paddle type fermentation system comprising:
a fermenter (1) for composting a raw material stored therein by fermentation;
a stirrer (2) with a paddle wheel (20) which stirs and moves said raw material in one direction, thereby turning said raw material;
a travel gear (3) for freely moving said stirrer in said fermenter;
rails (12b) for moving said travel gear between a raw material inlet (4) and an outlet (5);
side walls (14) for surrounding said fermenter;
said rails (12b) being supported by side walls (1a) of said fermenter; and said paddle wheel (20) having blade tips (20a,20b) which are capable of turning said raw material in opposite directions in response to forward and backward rotation of said paddle wheel,
wherein said stirrer is moved to travel through said fermenter from the outlet side toward the inlet side with said paddle wheel rotating forward, thereby stirring and transferring all the raw material in said fermenter in the direction of said outlet (5), and thereafter, in order to return said stirrer (2) to an operation start point, it is moved to travel through said fermenter from the inlet side toward the outlet side with said paddle wheel rotating backward, thereby turning a part of the raw material in said fermenter in the direction of said inlet (4).

2. A horizontal paddle type fermentation system according to claim 1, wherein the side walls (14) that surrounds said fermenter and the side walls (1a) of said fermenter are integrated with each other, and support blocks (19) for said rails that support said travel gear are secured to inner wall surfaces of said integrated side walls.

3. A method of operating the horizontal paddle type fermentation system of claim 1 or 2, wherein said traveling of the stirrer from the outlet side toward the inlet side comprises consecutive traveling along the direction toward the outlet side and traversing the direction.

4. A fermentation system operating method according to claim 3, wherein a return start point (PB) for returning said stirrer (2) to the operation start point (PA) in said fermenter is changed for each run, thereby preventing the turning of the raw material in the direction of said inlet from being localized on one region.

5. A fermentation system operating method according to claim 4, wherein a distance through which said stirrer is traversed during said return operation is set in a range of from zero to a distance corresponding to a width of said paddle wheel, thereby defining a range of turning the raw material in the direction of said inlet.

## Patentansprüche

1. Fermentiersystem des Horizontalschaufelradtyps, das Folgendes aufweist:
einen Fermentierer (1) zur Kompostierung von darin gespeichertem Rohmaterial durch Fermentierung;
einen Rührer bzw. eine Rührvorrichtung (2) mit einem Schaufelrad (20), die das Rohmaterial in eine Richtung rührt und bewegt, wodurch das Rohmaterial gewendet wird;
ein Fahrwerk (3) für die freie Bewegung des Rührers im Fermentierer;
Schienen (12b) zur Bewegung des Fahrwerks zwischen einem Rohmaterialeinlass (4) und einem Auslass (5);
Seitenwände (14), um den Fermentierer zu umgeben;
wobei die Schienen (12b) durch die Seitenwände (1a) des Fermentierers getragen werden; und wobei das Schaufelrad (20) Blattspitzen bzw. Schaufelspitzen (20a, 20b) besitzt, die angepasst sind für das Wenden des Rohmaterials in entgegengesetzte Richtungen ansprechend auf eine Vorwärts- und Rückwärtsdrehung des Schaufelrads,
wobei der Mischer bzw. Rührer bewegt wird, um sich durch den Fermentierer von der Auslassseite in Richtung auf die Einlassseite zu bewegen, und zwar mit dem Schaufelrad sich nach vorne drehend, wodurch das gesamte Rohmaterial im Fermentierer in Richtung auf den Auslass (5) gerührt und transferiert wird, und wobei danach, und zwar für die Rückführung des Rührers (2) an einen Betriebsstartpunkt, der Rührer für eine Bewegung durch den Fermentierer von der Einlassseitenrichtung auf die Auslassseite mit dem Schaufelrad sich nach rückwärts drehend bewegt wird, wodurch ein Teil des Rohmaterials im Fermentierer in Richtung auf den Einlass (4) gewendet wird.

2. Fermentiersystem vom Horizontalschaufeltyp gemäß Anspruch 1, wobei die Seitenwände (14), die den Fermentierer umgeben und die Seitenwände (1a) des Fermentierers miteinander integriert sind, und wobei Trageblöcke (19) für die Schienen, die das Fahrwerk tragen, an den Innenwandoberflächen der integrierten Seitenwände gesichert sind.

3. Verfahren zum Betrieb eines Fermentiersystems vom Horizontalschaufeltyp nach Anspruch 1 oder 2, wobei die Fortbewegung des Rührers von der Auslassseite in Richtung auf die Einlassseite die aufeinanderfolgende Fortbewegung entlang der Richtung in Richtung auf die Auslassseite und das Queren der Richtung aufweist.

4. Betriebsverfahren für Fermentiersystem gemäß Anspruch 3, wobei der Rückführstartpunkt (PB) für das Rückführen des Rührers (2) zum Betriebsstartpunkt (PA) im Fermentierer für jeden Durchgang verändert wird, wodurch vermieden wird, dass das Wenden des Rohmaterials in Richtung auf den Einlass auf einen Bereich lokalisiert ist.

5. Betriebsverfahren für Fermentiersystem gemäß Anspruch 4, wobei der Abstand, durch welchen der Rührer während des Rückführbetriebs geführt wird, auf einen Bereich von Null bis auf einen Abstand eingestellt ist, der einer Breite des Schaufelrads entspricht, wodurch ein Bereich des Wendens des Rohmaterials in Richtung auf den Einlass hin definiert ist.

## Revendications

1. Système de fermentation du type à palettes horizontales comprenant :
- un dispositif de fermentation (1) pour composter par fermentation une matière brute qui y est stockée ;
- un agitateur (2) muni d'une roue à palettes (20) qui agite et déplace ladite matière brute dans une direction, de manière à tourner ladite matière brute ;
- un mécanisme de déplacement (3) pour déplacer librement ledit agitateur dans ledit dispositif de fermentation ;
- des rails (12b) pour déplacer ledit mécanisme de déplacement entre une entrée (4) et une sortie (5) de matière brute ;
- des parois latérales (14) pour entourer ledit dispositif de fermentation ;
lesdits rails (12b) étant supportés par des parois latérales (1a) dudit dispositif de fermentation, et ladite roue à palettes (20) présentant des extrémités de lame (20a, 20b) qui sont adaptées pour tourner ladite matière brute dans des sens opposés en réponse à une rotation vers l'avant et vers l'arrière de ladite roue à palettes,
dans lequel ledit agitateur est déplacé de manière à traverser ledit dispositif de fermentation depuis le côté de sortie vers le côté d'entrée avec la roue à palettes tournant vers l'avant, de manière à agiter et transférer toute la matière brute située dans ledit dispositif de fermentation dans la direction de ladite sortie (5), et ensuite, afin de faire revenir ledit agitateur (2) à un point de départ d'opération, il est déplacé de manière à traverser ledit dispositif de fermentation depuis le côté d'entrée vers le côté de sortie avec la roue à palettes tournant vers l'arrière, de façon à tourner une partie de la matière brute située dans ledit dispositif de fermentation dans la direction de ladite entrée (4).

2. Système de fermentation du type à palettes horizontales selon la revendication 1, dans lequel les parois latérales (14) qui entourent ledit dispositif de fermentation et les parois latérales (1a) dudit dispositif de fermentation sont intégrées les unes aux autres, et des blocs de support (19) pour lesdits rails qui supportent ledit mécanisme de déplacement sont fixés à des surfaces de paroi intérieures desdites parois latérales intégrées.

3. Procédé d'exploitation du système de fermentation à palettes horizontales de la revendication 1 ou de la revendication 2, dans lequel ledit déplacement de l'agitateur depuis le côté de sortie vers le côté d'entrée comprend de manière consécutive un déplacement longitudinal en direction du côté de sortie et un déplacement transversal par rapport à ladite direction.

4. Procédé d'exploitation de système de fermentation selon la revendication 3, dans lequel un point de départ de retour (PB) pour faire revenir ledit agitateur (2) au point de départ d'opération (PA) dans ledit dispositif de fermentation est changé pour chaque trajet, de manière à empêcher la rotation de la matière brute dans la direction de ladite entrée d'être localisée dans une seule région.

5. Procédé d'exploitation de système de fermentation selon la revendication 4, dans lequel une distance que ledit agitateur est amené à traverser pendant ladite opération de retour est fixée dans un intervalle compris entre zéro et une distance correspondant à une largeur de ladite roue à palettes, de manière à définir un intervalle de rotation de la matière brute dans la direction de ladite entrée.
